# EUROPÄISCHE PATENTANMELDUNG

(11) **EP 0 957 554 A1**
(43) Veröffentlichungstag der Anmeldung: **17.11.1999**
(21) Anmeldenummer: 99810425.1
(22) Anmeldetag: 14.05.1999
(51) Int. Cl.: H02G 5/06

(54) **Leitungsabschnitt einer gasisolierten Leitung**

(30) Priorität: 15.05.1998 DE 19821888
(71) Anmelder: Asea Brown Boveri AG, 5401 Baden (CH)
(72) Erfinder: Mendik, Michael, Dr., 8820 Wädenswil (CH); Brühl, Bodo, Dr., 5444 Künten (CH); Worzyk, Thomas, 37030 Rödeby (SE)
(74) Vertreter: Kaiser, Helmut, Dr.

(57) **Zusammenfassung**

Der Leitungsabschnitt der gasisolierten Leitung (1) weist eine aus einem polymeren Kapselungsrohr (2) bestehende, isoliergasgefüllte Kapselung auf. Im Inneren des Kapselungsrohrs (2) ist ein parallel zu dessen Achse geführter und mit Hochspannung beaufschlagter, rohrförmiger Stromleiter (4) angeordnet. Dieser Stromleiter (4) ist gehalten von auf der Innenfläche des Kapselungsrohrs (2) abgestützten Isolatoren. Mindestens einer (3) dieser Stützisolatoren weist einen auf der Mantelfläche des Stromleiters (4) aufliegenden Tragring (5) auf.

An den Tragring (5) sind sternförmig mindestens drei in Umfangsrichtung gleichmässig verteilte und hohl ausgebildete Tragelemente angeformt, welche quer zur Achse jeweils ein nach Art eines Bogens oder eines Trapezes ausgebildetes Profil aufweisen. Die Tragelemente enthalten jeweils einen schalenförmig ausgebildeten Fuss (7) mit einer gegenüber dem Abstand (a) zwischen Stromleiter (4) und Innenfläche des Kapselungsrohrs (2) geringen Dicke und mit einer gegenüber der Dicke (d) grosse Länge (1) in axialer Richtung. Mindestens zwei dieser Füsse (7) liegen auf der Innenfläche des Kapselungsrohrs (2) auf.

Es wird so die elektrische Feldstärke in den zwischen Stützisolator (3) und Innenfläche des polymeren Kapselungsrohrs (2) vorhandenen Spalten gering gehalten und dadurch die dielektrische Festigkeit des Leiterabschnitts (1) nach der Erfindung optimiert.

## Beschreibung

### TECHNISCHES GEBIET

Bei der Erfindung wird ausgegangen von einem Leitungsabschnitt einer gasisolierten Leitung nach dem Oberbegriff von Patentanspruch 1. Gasisolierte Leitungen werden mit Vorteil zur Energieübertragung in Ballungszentren verwendet, da sie unterirdisch verlegt werden und ohne erhebliche Beeinträchtigung der durch den Verkehr, die Wasser- und Gasversorgung sowie die Abwasserentsorgung bestimmten Infrastruktur erstellt oder erweitert können.

### STAND DER TECHNIK

Ein Leitungsabschnitt der eingangs genannten Art ist beispielsweise aus dem Patentdokument 0 789 438 A2 bekannt. In diesem Dokument ist ein Leitungsabschnitt einer gasisolierten Leitung beschrieben, bei der ein hochspannungsführender Stromleiter in einem mit komprimiertem SF₆ gefüllten Rohr aus Isoliermaterial, wie typischerweise Polyäthylen, angeordnet ist. Das Isolierrohr trägt auf seiner Mantelfläche eine feldsteuernde und gegebenenfalls auftretenden Rückstrom führende Schicht aus leitendem oder halbleitendem Material. Der hochspannungsführende Stromleiter ist rohrförmig ausgebildet und ist mittels Stützisolatoren zentrisch im Kapselungsrohr angeordnet. Die Stützisolatoren können radial ausgerichtete oder als gleichseitiges Dreieck ausgebildete Isolierbeine umfassen, welche jeweils in einer von mehreren in der Mantelfläche des Stromleiters vorgesehenen, hinterschnitten ausgebildeten Längsnuten gehalten sind. Ein solchen Leitungsabschnitt ist wegen des hinterschnitten ausgebildete Längsnuten aufweisenden Stromleiters und der aus einer Vielzahl von Isolierbeinen bestehenden Stützisolatoren relativ aufwendig.

In US 4,018,978 A und US 4,132,855 A sind Stützisolatoren für einen hochspannungsführenden Stromleiter einer metallgekapselten, gasisolierten Leitung beschrieben, welche sich jeweils mit Tragbögen oder mit einem Tragring auf der Innenfläche der Kapselung abstützen.

### KURZE DARSTELLUNG DER ERFINDUNG

Der Erfindung, wie sie in den Patentansprüchen angegeben ist, liegt die Aufgabe zugrunde, einen Leitungsabschnitt einer gasisolierten Leitung der eingangs genannten Art zu schaffen, welcher sich durch gute dielektrische Eigenschaften auszeichnet und welcher zugleich in einfacher und kostengünstiger Weise hergestellt werden kann.

Beim Leitungsabschnitt nach der Erfindung ist nur ein relativ geringer Teil des Werkstoffs der Stützisolatoren bis in die Nähe des Kapselungsrohrs geführt. Wegen dieses kleinen Anteils an Material mit einer gegenüber dem Isoliergas höheren Dielektrizitätskonstanten treten in Spalten, die zwischen der Innenfläche des Kapselungsrohrs und den Aussenflächen von Tragelementen der Stützisolatoren angeordnet sind, vergleichsweise geringe elektrische Feldstärken auf. Aus diesem Grund, und da die Stützisolatoren zudem praktisch kantenfrei an die Innenfläche des Kapselungsrohrs geführt sind, werden dielektrische Schwachstellen im Bereich des Kapselungsrohrs weitgehend vermieden.

Beim Leitungsabschnitt nach der Erfindung können die als Kapselungsrohr ausgeführte Kapselung auf der einen Seite und der Stromleiter und die Stützisolatoren auf der anderen Seite zunächst als voneinander getrennte Systeme gefertigt werden. Da die Kapselung bei der Montage des Leitungsabschnitts zunächst leer ist, kann sie durch Verschweissen von Kapselungsrohrabschnitten ohne grossen Aufwand hergestellt werden. Die hierbei gebildeten Schweissnähte können leicht nachbearbeitet und problemlos auf Dichtigkeit und Festigkeit überprüft werden. Zudem kann die so hergestellte Kapselung vor dem Einbau von Stromleiter und Stützisolatoren in einfacher Weise, beispielsweise mit einem Roboter, gereinigt werden. Sodann können der Stromleiter und die Stützisolatoren in die Kapselung eingezogen werden. Hierbei ist es von besonderem Vorteil, dass durch geeignete Formgebung der Stützisolatoren die Reibung zwischen den Stützisolatoren und der Kapselung gering gehalten werden kann, und/oder dass der Durchmesser des Kapselungsrohrs grösser als der Durchmesser des Stützisolators sein kann, da sich so das Einziehen mit geringem Kraftaufwand ausführen lässt. Wegen der kleinen Reibung und wegen des geringen Durchmessers der Stützisolatoren wird zudem bei der Montage und während des Betriebs der Anlage die Bildung von dielektrisch unerwünschtem Abrieb verhindert.

Der Leitungsabschnitt weist daher auch aus diesem Grund ein günstiges dielektrisches Verhalten auf. Zugleich werden wegen der bogen- oder trapezförmigen Ausbildung der auf dem Kapselungsrohr aufliegenden Tragelemente der Stützisolatoren die Stützkräfte günstig auf die Kapselung geführt, so dass praktisch keine Gefahr besteht, dass die Stützisolatoren das Kapselungsrohr zu stark belasten und es dann gegebenenfalls deformieren. Wegen der bogen- oder trapezförmigen Ausbildung der Tragelemente wird zugleich die Umbruchfestigkeit der Stützisolatoren wesentlich erhöht und werden so negative Auswirkungen auf die dielektrischen Eigenschaften des Leiterabschnitts vermieden.

Durch eine Elektrode, welche in der Innenfläche des Tragrings jedes der Stützisolatoren angeordneten sein kann können problemlos die (Stromleiter, Stützisolator und Isoliergas gemeinsamen) Tripelpunkte dielektrisch entlastet werden.

### KURZE BESCHREIBUNG DER ZEICHNUNGEN

Zwei bevorzugte Ausführungsbeispiele der Erfindung und die damit erzielbaren weiteren Vorteile werden nachfolgend anhand von Zeichnungen näher erläutert. Hierbei zeigt:
- Fig.2: eine Aufsicht in Pfeilrichtung auf einen längs II-II geführten Schnitt durch den Leitungsabschnitt nach Fig.1,
- Fig.3: eine Aufsicht auf einen radial geführten Schnitt durch die obere Hälfte einer zweiten Ausführungsform des Leitungsabschnitts nach der Erfindung, und
- Fig.4: eine Aufsicht in Pfeilrichtung auf einen längs IV-IV geführten Schnitt durch einen Stützisolator des Leitungsabschnitt nach Fig.3.

### WEG ZUR AUSFÜHRUNG DER ERFINDUNG

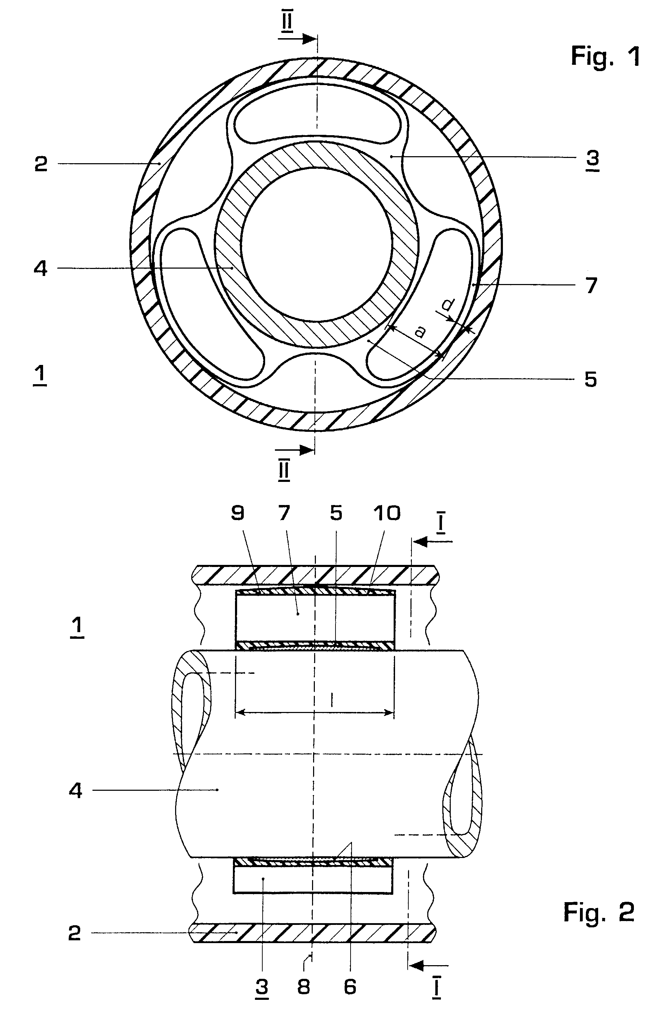

In allen Figuren beziehen sich gleiche Bezugszeichen auf gleichwirkende Teile. Der in den Figuren 1 und 2 dargestellte Leitungsabschnitt einer gasisolierten Leitung 1 weist eine im wesentlichen aus einem Rohr 2 bestehende Kapselung auf. Im Inneren des Druckrohrs sind Stützisolatoren 3 angeordnet, von denen lediglich ein Stützisolator 3 dargestellt ist, sowie ein im wesentlichen parallel zur Achse des Rohrs geführter und sich auf Hochspannungspotential befindender, rohrförmig ausgebildeter Stromleiter 4 eines dreiphasigen Netzes oder eines Gleichstromnetzes mit Netzspannungen von jeweils bis zu mehreren Hundert kV.

Das Kaselungsrohr 2 ist mit einem Isoliergas, wie etwa SF₆, von bis zu einigen bar Druck gefüllt und besteht aus einem Isolierstoff, wobei als Material für den Isolierstoff ein thermoplastisches Polymer verwendet wird. Der Thermoplast kann mit einem elektrisch leiffähigen Material, beispielsweise mit Russ, gefüllt sein, da so zum einen die gasisolierte Leitung 1 nach aussen elektrostatisch wirkungsvoll abgeschirmt ist, und da so zum anderen dem Kapselungsrohr ein definiertes Potential, wie insbesondere Erdpotential, zugeordnet ist.

Das Kapselungsrohr 2 ist aus leicht zu transportierenden, beispielsweise 10 bis 20 m langen Rohrabschnitten aufgebaut, welche miteinander stirnseitig verschweisst sind. Der Werkstoff des Kapselungsrohrs besteht mit Vorteil aus einem nichtvernetzten Thermoplast. Er lässt sich dann bei erhöhten Temperaturen gut verformen und gut schweissen. Ein geeignetes thermoplastisches Material ist beispielsweise ein nichtvernetztes Polyäthylen hoher Dichte. Auf der Mantelfläche des Kapselungsrohrs 2 ist zusätzlich eine nicht bezeichnete, potentialsteuernde Schicht, vorzugsweise aus leitendem oder halbleitendem Material, angeordnet. Diese Schicht ordnet der Mantelfläche des Kapselungsrohrs 2 Erdpotential zu. Je nach Anforderung an den Leitungsabschnitt können die vorgenannten Funktionen gegebenenfalls lediglich von der Schicht oder der Füllung des thermoplastischen Materials mit dem leiffähigen Material ausgeführt werden.

Die Stützisolatoren enthalten entsprechend dem Stützisolator 3 jeweils einen auf der Mantelfläche des Stromleiters 4 festgesetzten Tragring 5. Der Tragring 5 weist auf seiner der Mantelfläche des Stromleiters 4 zugewandten Innenfläche mindestens eine durch Kontaktierung der Mantelfläche des Stromleiters 4 auf dessen Potential geführte, vorzugsweise ringförmig ausgebildete, Elektrode 6 auf, welche die Stromleiter 4, Stützisolator 3 und Isoliergas gemeinsamen Tripelpunkte dielektrisch entlastet.

An den Tragring 5 sind sternförmig drei in Umfangsrichtung gleichmässig verteilte und hohl ausgebildete Tragelemente angeformt, welche quer zur Achse jeweils ein nach Art eine Bogens ausgebildetes Profil aufweisen. Die Tragelemente weisen jeweils zwei in Umfangsrichtung gegeneinander versetzt am Tragring 5 ansetzende und zunächst überwiegend radial geführte Schenkel 11 und 12 auf, welche gegenläufig gekrümmt in einen Fuss 7 integriert sind. Der Fuss 7 liegt im allgemeinen auf der Innenfläche des Kapselungsrohrs 2 auf, kann aber auch durch einen aus der Figur nicht ersichtlichen Spalt davon getrennt sein. Zumindest zwei der Füsse liegen auf der Innenfläche des Kapselungsrohrs 2 auf. Jeder der Füsse 7 hat gegenüber dem Abstand a zwischen Stromleiter 4 und Innenfläche des Kapselungsrohrs 2 geringe Dicke d, ist schalenförmig ausgebildet und weist eine gegenüber der Dicke d grosse Länge l in axialer Richtung auf. Durch diese Ausbildung des Stützisolators 3 wird eine hohe mechanische Stabilität des Leiterabschnitts erreicht, da die Füsse 7 mit einer grossen Fläche auf der Innenfläche des Kapselungsrohrs 2 aufliegen können und so eine grosse Klemmkraft bei relativ geringer Flächenpressung ausüben. Das aus Leiterabschnitts erreicht, da die Füsse 7 mit einer grossen Fläche auf der Innenfläche des Kapselungsrohrs 2 aufliegen können und so eine grosse Klemmkraft bei relativ geringer Flächenpressung ausüben. Das aus verhältnismässig leicht verformbarem Material bestehende Kapselungsrohr 2 kann so seine geometrischen Abmessungen bei Betrieb des Leitungsabschnitts weitgehend erhalten. Um Deformationen oder ein Umbrechen des Stützisolators 3 zu vermeiden, ist es zweckmässig, den Tragring 5 und die Füsse 7 aus einem thermisch und mechanisch hoch belastbaren, thermoplastischen Polymer, vorteilhafterweise einem Polysulfon, zu formen.

Durch die Ausbildung des Stützisolators 3 mit dünnen schalenförmigen Füssen 7 wird zudem erreicht, dass verhältnismässig wenig Isoliermaterial mit einer gegenüber dem Isoliergas grossen Dielektrizitätskonstanten an die Innenfläche des Kapselungsrohrs 2 geführt ist. Im Unterschied zu Stützisolatoren nach dem Stand der Technik, welche auf der Wand aufliegende Kanten oder Spitzen aufweisen oder mit einer grossen Materialmenge an die Innenfläche des Kapselungsrohrs geführt sind, wird so die elektrische Feldstärke in den zwischen Stützisolator und Innenfläche des Kapselungsrohrs vorhandenen Spalten gering gehalten und die dielektrische Festigkeit des Leiterabschnitts nach der Erfindung optimiert.

Je nach Abmessung des Stützisolators 3 können anstelle von drei auch vier oder mehr Füsse 7 an den Tragring 5 angeformt sein. Wie aus Fig.1 ersichtlich ist, können die Füsse im wesentlichen nach Art einer Ellipse ausgebildet sein, sie können aber auch kreis- oder parabelförmig gestaltet sein.

Der Stützisolator 3 ist spiegelsymmetrisch zu einer senkrecht zur Rohrachse geführten Ebene 8 ausgebildet. Er kann dann in einfacher Weise durch Spritzgiessen hergestellt werden. Hierbei ist es von Vorteil die Elektrode 6 aus einem elektrisch leiffähigen Kunststoff zu bilden, da dann die Elektrode 6 ebenfalls durch Spritzgiessen hergestellt werden kann.

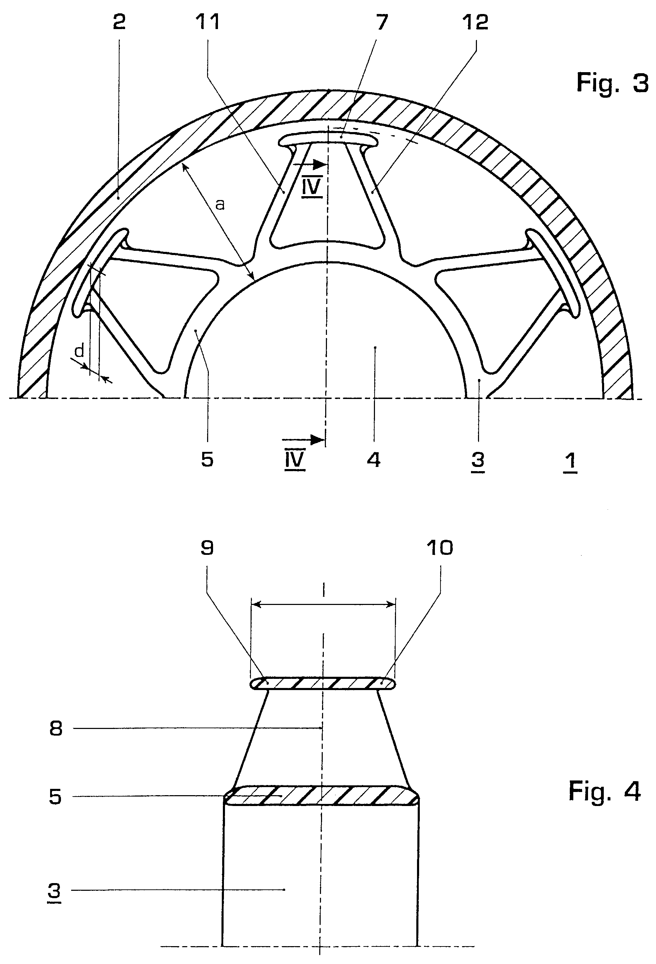

Bei der Ausführungsform nach den Figuren 3 und 4 ist der durch den Tragring 5 geführte Stromleiter 4 nur angedeutet und ist die bei der Ausführungsform nach den Figuren 1 und 2 vorgesehene Steuerelektrode nicht dargestellt. An den Tragring 5 sind sternförmig sechs hohle Tragelemente angeformt, die quer zur Kapselungsrohrachse jeweils ein nach Art eines Trapezes ausgebildetes Profil aufweisen. Das Trapez weist zwei in Umfangsrichtung zwei gegeneinander versetzt am Tragring 5 ansetzende, zueinander geneigt angeordnete und zunächst überwiegend radial und dann überwiegend tangential geführte Schenkel 11, 12 auf. Auch dieses Tragelement kann bei geringer Masse grosse Stützkräfte aufnehmen. Dadurch, dass der Fuss 7 in Umfangsrichtung über die Schenkel 11, 12 erstreckt ist, wird die vom Stromleiter auf das Kapselungrohr 2 übertragene Kraft auf eine grosse Fläche verteilt und so das Kapselungsrohr 2 nur mit geringer Flächenpressung beaufschlagt. Entsprechend der Ausführungsform nach den Figuren 1 und 2 hat jeder der Füsse 7 gegenüber dem Abstand a zwischen dem Stromleiter 4 und der Innenfläche des Kapselungsrohrs 2 geringe Dicke d und weist eine gegenüber der Dicke d grosse Länge l in axialer Richtung auf.

Auch bei diesem Tragelement weisen die Füsse jeweils zwei in Richtung der Rohrachse voneinander beabstandete Endabschnitte 9, 10 auf, welche jeweils nach Art einer Schlittenkufe gegenüber der Innenfläche des Kapselungsrohrs 2 aufgebogen sind und entsprechend der Ausführungsform nach den Figuren 1 und 2 das Einführen des Stützisolators 3 in das Kapselungsrohr erleichtern und unerwünschten Materialabrieb verringern.

Wie aus Fig.3 ersichtlich ist, sind die Füsse 7 der drei dargestellten Tragelemente durch einen mehr oder weniger grossen Spalt von der Innenfläche des Kapselungsrohrs 2 getrennt, wohingegen mindestens zwei der Füsse der drei nicht dargestellten unteren Tragelemente auf der Innenfläche aufliegen. Der Durchmesser des Kapselungsrohrs 2 ist daher grösser als der Durchmesser des Stützisolators 3. Es kann daher der Stützisolator 3 praktisch kräftefrei und frei von jeglichem Abrieb in das Kapselungsrohr eingeschoben werden.

Durch die Ausbildung des Stützisolators 3 mit dünnen schalenförmigen Füssen 7 wird erreicht, dass verhältnismässig wenig Isoliermaterial mit einer gegenüber dem Isoliergas grossen Dielektrizitätskonstanten an die Innenfläche des Kapselungsrohrs 2 geführt ist. Es wird so die elektrische Feldstärke in den zwischen Stützisolator und Innenfläche des Kapselungsrohrs vorhandenen mehr oder weniger grossen Spalten gering gehalten und die dielektrische Festigkeit des Leiterabschnitts nach der Erfindung optimiert.

### Bezugszeichenliste

- 1: gasisolierte Leitung
- 2: Kapselungsrohr
- 3: Stützisolatoren
- 4: Stromleiter
- 5: Tragring
- 6: Elektrode
- 7: Schenkel
- 8: Ebene
- 9,10: Endabschnitte
- 11, 12: Schenkel

## Patentansprüche

1. Leitungsabschnitt einer gasisolierten Leitung (1) mit einer im wesentlichen aus einem polymeren Rohr (2) bestehenden, isoliergasgefüllten Kapselung, mit einem im Inneren des Kapselungsrohrs (2) angeordneten, im wesentlichen parallel zu dessen Achse geführten und mit Hochspannung beaufschlagten, rohrförmigen Stromleiter (4) und mit den Stromleiter haltenden und auf der Innenfläche des Kapselungsrohrs abgestützten Isolatoren (3), dadurch gekennzeichnet, dass mindestens einer der Stützisolatoren (3) einen auf der Mantelfläche des Stromleiters aufliegenden Tragring (5) aufweist, dass an den Tragring (5) sternförmig mindestens drei in Umfangsrichtung gleichmässig verteilte und hohl ausgebildete Tragelemente angeformt sind, welche quer zur Achse jeweils ein nach Art eines Bogens oder eines Trapezes ausgebildetes Profil aufweisen und jeweils einen schalenförmig ausgebildeten Fuss (7) mit einer gegenüber dem Abstand (a) zwischen Stromleiter (4) und Innenfläche des Kapselungsrohrs (2) geringen Dicke und mit einer gegenüber der Dicke (d) grossen Länge (l), und dass mindestens zwei der Füsse auf der Innenfläche des Kapselungsrohrs (2) aufliegen.

2. Leitungsabschnitt nach Anspruch 1, dadurch gekennzeichnet, dass das Tragelement bei Ausbildung nach Art eines Bogens zwei in Umfangsrichtung gegeneinander versetzt am Tragring (5) ansetzende und zunächst überwiegend radial geführte Schenkel (11, 12) aufweist, welche gegenläufig gekrümmt in den Fuss (7) integriert sind.

3. Leitungsabschnitt nach Anspuch 1, dadurch gekennzeichnet, dass das Tragelement bei Ausbildung nach Art eines Trapezes zwei in Umfangsrichtung gegeneinander versetzt am Tragring (5) ansetzende und zueinander geneigt angeordnete Schenkel (11, 12) aufweist, welche den Fuss (7) halten.

4. Leitungsabschnitt nach Anspruch 3, dadurch gekennzeichnet, dass der Fuss (7) in Umfangsrichtung über die Schenkel (13, 14) erstreckt ist.

5. Leitungsabschnitt nach einem der Ansprüche 1 bis 4, dadurch gekennzeichnet, dass der Fuss (7) jeweils zwei in Richtung der Rohrachse voneinander beabstandete Endabschnitte (9, 10) aufweisen, welche jeweils nach Art einer Schlittenkufe gegenüber der Innenfläche des Kapselungsrohrs (2) aufgebogen sind.

6. Leitungsabschnitt nach Anspruch einem der Ansprüche 1 bis 5, dadurch gekennzeichnet, dass der Stützisolator (3) spritzgegossen ist.

7. Leitungsabschnitt nach Anspruch 6, dadurch gekennzeichnet, dass der Stützisolator (3) aus einem thermisch und mechanisch hoch belastbaren, thermoplastischen Polymer geformt sind.

8. Leitungsabschnitt nach Anspruch 7, dadurch gekennzeichnet, dass der Thermoplast ein Polysulfon ist.

9. Leitungsabschnitt nach einem der Ansprüche 1 bis 8, dadurch gekennzeichnet, dass der Tragring (5) auf seiner der Mantelfläche des Stromleiters (4) zugewandten Innenfläche mindestens eine auf das Potential des Stromleiters (4) geführte und vorzugsweise aus elektrisch leiffähigem Kunststoff gebildete Elektrode (6) aufweist.

10. Leitungsabscnitt nach einem der Ansprüche 1 bis 9, dadurch gekennzeichnet, dass der Durchmesser des Kapselungsrohrs (2) grösser als der Durchmesser des Stützisolators (3) ist.
